# FASCICULE DE BREVET EUROPEEN

(11) **EP 3 718 759 B1**
(45) Date de publication et mention de la délivrance du brevet: **09.02.2022**
(21) Numéro de dépôt: 20166209.5
(22) Date de dépôt: 27.03.2020
(51) Int. Cl.: B32B 3/08, B32B 3/12, B32B 3/26, B32B 3/30, B32B 7/12, B32B 15/20

(54) **ASSEMBLAGE CONSTITUANT UN MATERIAU ACOUSTIQUEMENT ABSORBANT**
ANORDNUNG AUS EINEM SCHALLDÄMMMATERIAL
ASSEMBLY FORMING AN ACOUSTICALLY ABSORBENT MATERIAL

(30) Priorité: 02.04.2019 FR 1903515
(43) Date de publication de la demande: 07.10.2020
(73) Titulaire: AIRBUS OPERATIONS, 31060 Toulouse Cedex 9 (FR)
(72) Inventeur: RAVISE, Florian, 44800 SAINT-HERBLAIN (FR); MERCAT, Florent, 31300 TOULOUSE (FR)
(74) Mandataire: Cabinet Le Guen Maillet

(56) Documents cités:
- FR-A1- 2 445 436
- US-A- 3 948 346
- US-B1- 9 514 734

## Description

### DOMAINE TECHNIQUE

La présente invention concerne un assemblage constituant un matériau acoustiquement absorbant.

### ETAT DE LA TECHNIQUE ANTERIEURE

Lors de son fonctionnement, un moteur d'aéronef génère du bruit. Ce moteur est logé dans une nacelle et pour atténuer ce bruit, il est connu de mettre en place des assemblages constituant un matériau acoustiquement absorbant autour du moteur dans la structure de la nacelle.

De tels assemblages constituant un matériau acoustiquement absorbant prennent par exemple la forme de structures en nid d'abeilles. Une telle structure en nid d'abeilles comporte deux plaques parallèles dont une est perforée et entre lesquelles sont agencées des cellules hexagonales juxtaposées les unes aux autres.

Il est également connu dans d'autres applications d'utiliser des troncs de cône qui sont placés dans des cavités.

Bien que d'un point de vue acoustique, de tels assemblages donnent de bons résultats, il est souhaitable de trouver un assemblage constituant un matériau acoustiquement absorbant qui permette d'atténuer plusieurs fréquences acoustiques et qui soit facile à fabriquer.

L'art antérieur représenté par le document US 3 948 346 A divulgue un matériau acoustiquement absorbant comprenant une plaque support, supportant une structure en nid d'abeilles, directement liée à une autre couche perforée, directement liée elle-même à une seconde couche en nid d'abeilles, et finalement surplombée par une seconde couche perforée. Cependant, les tubes dans les perforations de la plaque intermédiaire ne sont pas présents.

### EXPOSE DE L'INVENTION

Un objet de la présente invention est de proposer un assemblage constituant un matériau acoustiquement absorbant qui puisse atténuer plusieurs fréquences acoustiques et qui soit facile à fabriquer.

A cet effet, est proposé un assemblage constituant un matériau acoustiquement absorbant et comportant :
- une première plaque,
- une deuxième plaque percée de trous,
- une plaque intermédiaire percée de trous traversants et disposée entre la première plaque et la deuxième plaque,
- une première structure en nid d'abeilles s'étendant entre la première plaque et la plaque intermédiaire et comportant des premières cages,
- une deuxième structure en nid d'abeilles s'étendant entre la deuxième plaque et la plaque intermédiaire et comportant des deuxièmes cages, et
- pour la plaque intermédiaire, et pour chaque trou traversant de ladite plaque intermédiaire, un tube débouchant par ses deux extrémités, où l'une des extrémités dudit tube est fixée à ladite plaque intermédiaire au niveau dudit trou traversant, et où l'autre extrémité dudit tube loge à l'intérieur d'une première cage.

Un tel assemblage permet d'obtenir une atténuation large bande et est facile à fabriquer. Avantageusement, au moins deux tubes ont des longueurs différentes.

Avantageusement, la plaque intermédiaire, la deuxième plaque et les tubes sont réalisés dans des matériaux acoustiquement rigides.

### BREVE DESCRIPTION DES DESSINS

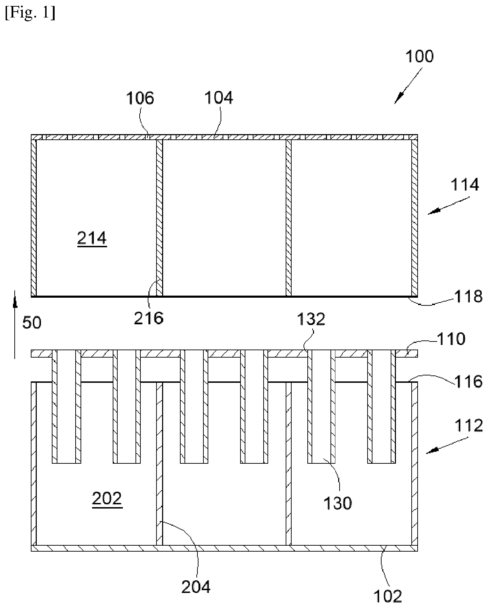

Les caractéristiques de l'invention mentionnées ci-dessus, ainsi que d'autres, apparaîtront plus clairement à la lecture de la description suivante d'un exemple de réalisation, ladite description étant faite en relation avec le dessin joint, où
[Fig. 1] est une vue en coupe et éclatée d'un assemblage constituant un matériau acoustiquement absorbant selon l'invention.

### EXPOSE DETAILLE DE MODES DE REALISATION

La Fig. 1 montre un assemblage 100 constituant un matériau acoustiquement absorbant selon l'invention. L'assemblage 100 comporte une première plaque 102 et une deuxième plaque 104 qui sont à distance l'une de l'autre. L'une des plaques, ici la deuxième plaque 104, est percée de trous 106 qui la traversent pour permettre le passage des ondes acoustiques. Entre la première plaque 102 et la deuxième plaque 104, est disposée une plaque intermédiaire 110. Les trois plaques 102, 104 et 110 sont parallèles.

Entre la première plaque 102 et la plaque intermédiaire 110 s'étend une première structure en nid d'abeilles 112 et entre la deuxième plaque 104 et la plaque intermédiaire 110 s'étend une deuxième structure en nid d'abeilles 114.

Ainsi, selon une direction d'empilement 50, l'assemblage 100 comporte successivement la première plaque 102, la première structure en nid d'abeilles 112, la plaque intermédiaire 110, la deuxième structure en nid d'abeilles 114 et la deuxième plaque 104.

La première structure 112 comporte une succession de premières cages 202, où chaque première cage 202 est creuse et est délimitée par des parois 204 s'étendant dans des plans parallèles à la direction d'empilement 50. D'une manière préférée, chaque première cage 202 délimite une alvéole hexagonale, mais d'autres formes sont envisageables.

De la même manière, la deuxième structure 114 comporte une succession de deuxièmes cages 214, où chaque deuxième cage 214 est creuse et est délimitée par des parois 216 s'étendant dans des plans parallèles à la direction d'empilement 50. D'une manière préférée, chaque deuxième cage 214 délimite une alvéole hexagonale, mais d'autres formes sont envisageables.

La première plaque 102 et la première structure 112 sont fixées l'une à l'autre par exemple par collage, soudage, etc.

La deuxième plaque 104 et la deuxième structure 114 sont fixées l'une à l'autre par exemple par collage, soudage, etc.

La première structure 112 et la plaque intermédiaire 110 sont fixées l'une à l'autre par exemple par collage, soudage, etc. La référence 116 montre une feuille d'adhésif de réticulation.

La deuxième structure 114 et la plaque intermédiaire 110 sont fixées l'une à l'autre par exemple par collage, soudage, etc. La référence 118 montre une feuille d'adhésif de réticulation.

La deuxième structure 114 avec la deuxième plaque 104 et la plaque intermédiaire 110 forment un résonateur quart d'ondes qui atténue les hautes fréquences acoustiques. L'assemblage 100 permet ainsi d'obtenir une atténuation large bande et est facile à fabriquer. L'assemblage 100 comporte également pour chaque première cage 202, au moins un tube 130 débouchant par ses deux extrémités et s'étendant selon une direction parallèle à la direction d'empilement 50.

L'une des extrémités de chaque tube 130 est fixée à la plaque intermédiaire 110 au niveau d'un trou traversant 132 que celle-ci comporte à cet effet et qui la traverse. Il y a ainsi une continuité fluidique entre une deuxième cage 214 et une première cage 202 par l'intermédiaire du tube 130. La fixation des tubes 130 à la plaque intermédiaire 110 s'effectue par exemple par soudage, collage, etc.

L'autre extrémité de chaque tube 130 loge à l'intérieur de la première cage 202 et y débouche.

La première structure 112, avec la première plaque 102, la plaque intermédiaire 110 et les tubes 130 forment un résonateur d'Helmholtz qui atténue les basses fréquences acoustiques. La fréquence qui est atténuée au sein de la première structure 112 dépend, entre autres, du nombre de tubes 130 par première cage 202 du diamètre des tubes 130 et de la longueur des tubes 130.

Ainsi, pour atténuer un spectre de fréquences plus large, les longueurs des tubes 130 sont différentes d'une première cage 202 à une autre. C'est-à-dire qu'au moins deux tubes 130 ont des longueurs différentes.

Selon un mode de réalisation particulier, le diamètre intérieur de chaque tube est compris entre 0,5 mm et 3 mm et la longueur des tubes 130 peut varier entre 10 et 25 mm par exemple. Dans le cas d'un moteur d'aéronef et selon un mode de réalisation particulier, la deuxième plaque 104 est percée avec un taux de perforation de l'ordre de 6 à 8 % dans le cas d'une entrée d'air et de l'ordre de 13 à 15 % dans le cas d'un inverseur de poussée.

Les différents éléments constituant l'assemblage 100 peuvent être réalisés en différents matériaux comme par exemple des matériaux métalliques comme l'aluminium ou un alliage d'aluminium, ou des matériaux composites. Le mode de fixation des éléments entre eux dépendra également des matériaux utilisés.

La plaque intermédiaire 110, la deuxième plaque 104 et les tubes 130 sont réalisés dans des matériaux acoustiquement rigides, c'est-à-dire qu'ils ne se déforment pas sous l'effet des ondes acoustiques. En revanche, la plaque intermédiaire 110, la deuxième plaque 104 et les tubes 130 sont réalisés dans des matériaux mécaniquement déformables ou flexibles pour pouvoir les appliquer sur des doubles courbures.

Selon un mode de réalisation particulier, la hauteur de la deuxième structure 114 est de l'ordre de 25 mm pour atténuer des fréquences intéressantes dans le contexte d'un moteur d'aéronef et la hauteur de la première structure 112 est de l'ordre de 15 mm.

Un procédé de fabrication de l'assemblage 100 est simple et comporte :
- une première étape de fourniture au cours de laquelle la plaque intermédiaire 110 avec les trous traversants 132 et les tubes 130 sont fournis,
- une première étape d'assemblage au cours de laquelle un tube 130 est fixé à la plaque intermédiaire 110 au niveau de chaque trou traversant 132,
- une deuxième étape de fourniture au cours de laquelle la première plaque 102 et la première structure 112 ainsi assemblées sont fournies,
- une deuxième étape d'assemblage au cours de laquelle la plaque intermédiaire 110 est fixée à la première structure 112,
- une troisième étape de fourniture au cours de laquelle la deuxième plaque 104 et la deuxième structure 114 ainsi assemblées sont fournies,
- une quatrième étape d'assemblage au cours de laquelle la plaque intermédiaire 110 est fixée à la deuxième structure 114.

En cas de collage entre la deuxième structure 114 et la plaque intermédiaire, la feuille d'adhésif de réticulation n'est pas présente au niveau des trous traversants 132 pour éviter d'obturer les tubes 130.

## Revendications

1. Assemblage (100) constituant un matériau acoustiquement absorbant et comportant :
- une première plaque (102),
- une deuxième plaque (104) percée de trous (106),
- une plaque intermédiaire (110) percée de trous traversants (132) et disposée entre la première plaque (102) et la deuxième plaque (104),
- une première structure en nid d'abeilles (112) s'étendant entre la première plaque (102) et la plaque intermédiaire (110) et comportant des premières cages (202),
- une deuxième structure en nid d'abeilles (114) s'étendant entre la deuxième plaque (104) et la plaque intermédiaire (110) et comportant des deuxièmes cages (214), et
- pour la plaque intermédiaire (110), et pour chaque trou traversant (132) de ladite plaque intermédiaire (110), un tube (130) débouchant par ses deux extrémités, où l'une des extrémités dudit tube (130) est fixée à ladite plaque intermédiaire (110) au niveau dudit trou traversant (132), et où l'autre extrémité dudit tube (130) loge à l'intérieur d'une première cage (202).

2. Assemblage (100) selon la revendication 1, **caractérisé en ce qu'**au moins deux tubes (130) ont des longueurs différentes.

3. Assemblage (100) selon l'une des revendications 1 ou 2, **caractérisé en ce que** la plaque intermédiaire (110), la deuxième plaque (104) et les tubes (130) sont réalisés dans des matériaux acoustiquement rigides.

## Patentansprüche

1. Anordnung (100), die ein akustisch absorbierendes Material bildet und Folgendes aufweist:
- eine erste Platte (102),
- eine zweite Platte (104), die von Löchern (106) durchbohrt ist,
- eine Zwischenplatte (110), die von Durchgangslöchern (132) durchbohrt ist und zwischen der ersten Platte (102) und der zweiten Platte (104) angeordnet ist,
- eine erste Wabenstruktur (112), die sich zwischen der ersten Platte (102) und der Zwischenplatte (110) erstreckt und erste Körbe (202) aufweist,
- eine zweite Wabenstruktur (114), die sich zwischen der zweiten Platte (104) und der Zwischenplatte (110) erstreckt und zweite Körbe (214) aufweist, und
- für die Zwischenplatte (110) und für jedes Durchgangsloch (132) der Zwischenplatte (110) eine Röhre (130), die an ihren zwei Enden mündet, wobei eins der Enden der Röhre (130) auf Höhe des Durchgangslochs (132) an der Zwischenplatte (110) befestigt ist, und wobei das andere Ende der Röhre (130) innerhalb eines ersten Korbs (202) untergebracht ist.

2. Anordnung (100) nach Anspruch 1, **dadurch gekennzeichnet, dass** mindestens zwei Röhren (130) unterschiedliche Längen aufweisen.

3. Anordnung (100) nach einem der Ansprüche 1 oder 2, **dadurch gekennzeichnet, dass** die Zwischenplatte (110), die zweite Platte (104) und die Röhren (130) aus akustisch starren Materialien hergestellt sind.

## Claims

1. Assembly (100) constituting an acoustically absorbent material and comprising:
- a first panel (102),
- a second panel (104) pierced with holes (106),
- an intermediate panel (110) pierced with through-holes (132) and arranged between the first panel (102) and the second panel (104),
- a first honeycomb structure (112) extending between the first panel (102) and the intermediate panel (110) and comprising first cages (202),
- a second honeycomb structure (114) extending between the second panel (104) and the intermediate panel (110) and comprising second cages (214), and
- for the intermediate panel (110), and for each through-hole (132) of said intermediate panel (110), a tube (130) opening out at the two ends thereof, where one of the ends of said tube (130) is fixed to said intermediate panel (110) at said through-hole (132), and where the other end of said tube (130) is accommodated inside a first cage (202).

2. Assembly (100) according to Claim 1, **characterized in that** at least two tubes (130) have different lengths.

3. Assembly (100) according to one of Claims 1 and 2, **characterized in that** the intermediate panel (110), the second panel (104) and the tubes (130) are produced from acoustically rigid materials.
